# EUROPÄISCHE PATENTANMELDUNG

(11) **EP 1 767 782 A1**
(43) Veröffentlichungstag der Anmeldung: **28.03.2007**
(21) Anmeldenummer: 06119053.4
(22) Anmeldetag: 17.08.2006
(51) Int. Cl.: F03G 7/06

(54) **Verfahren zur Steuerung eines Formgedächtnislegierungaktor**

(30) Priorität: 23.09.2005 DE 102005045395
(71) Anmelder: ROBERT BOSCH GMBH, 70442 Stuttgart (DE)
(72) Erfinder: Berger, Rainer, 77815, Buehl (DE); Konzili, Markus, 77833, Ottersweier (DE)

(57) **Zusammenfassung**

Die vorliegende Erfindung umfasst ein Verfahren und eine Vorrichtung zur Steuerung eines Aktors, der unter Wärmeeinfluss längenveränderbar ist. Nach dem erfindungsgemäßen Verfahren wird ein Strom durch den Aktor geleitet, um diesen zu erwärmen. In einem weiteren Schritt wird der Innenwiderstand des Aktors ermittelt. Die Steuerung der Länge des Aktors geschieht dann in Abhängigkeit des ermittelten Innenwiderstands, über den auf die Temperatur des Aktors rückgeschlossen werden kann. Die erfindungsgemäße Vorrichtung zur Steuerung des Aktors ist zur Ausführung des Verfahrens eingerichtet.

## Beschreibung

### Stand der Technik

Die vorliegende Erfindung betrifft ein Verfahren und eine Vorrichtung zur Steuerung eines Aktors, der unter Wärmeeinfluss längenveränderbar ist.

Aktoren, insbesondere Zugaktoren, auf Basis von Formgedächtnislegierungen in Drahtform sind im Stand der Technik in unterschiedlichen Ausgestaltungen bekannt. Diese Aktoren verkürzen sich unter Wärmeeinfluss. Sie werden heute vorwiegend bei medizinischen Anwendungen und im Bereich der Haushaltstechnik eingesetzt.

Formgedächtnislegierungen haben stark ausgeprägte thermomechanische Effekte, die in der Thermoviskoelastizität und -plastizität im Normalfall nicht in Erscheinung treten. Aufgrund ihrer ungewöhnlichen Eigenschaften ermöglichen derartige Legierungen die Konstruktion von tragenden Bauteilen, die als Stellelemente oder als Sensoren einsetzbar sind. Die Bewegungsfähigkeit dieser Legierungen kann mit ihrem Sensorpotential kombiniert werden, so dass ein einfach erscheinendes Bauteil eine komplexe Funktion ausüben kann. Die Materialeigenschaften dieser Formgedächtnislegierungen beruhen auf einer diffusionslosen Phasenumwandlung (martensitische Phasenumwandlung), die in einem bestimmten Temperaturbereich stattfinden können. Zu den Formgedächtnislegierungen gehören zum Beispiel Nickel-Titan, Kupfer-Zink-Aluminium und Eisen- Mangan-Silizium.

Ursache für diesen Effekt ist die temperaturabhängige Änderung der Kristallstruktur, wobei die beteiligten Phasen aus Austenit und Martensit geordnete Gitterstrukturen aufweisen. Bei hoher Temperatur ist die Legierung austenitisch, bei tiefen Temperaturen martensitisch. Wird ein Bauteil einer martensitischen Formgedächtnislegierung unterhalb einer kritischen Temperatur verformt, so findet nur eine reversible Formänderung durch Verschieben der Gitterstruktur statt. Sobald das Bauteil über die Umwandlungstemperatur erwärmt wird, bildet sich Austenit mit der ursprünglich vorhandenen Orientierung, so dass das Bauteil in seine ursprüngliche Form zurückkehrt.

Wird ein Draht aus einer Formgedächtnislegierung erwärmt, so verkürzt sich der Draht nicht, solange er in der martensitischen Phase verbleibt. Beim Erreichen der Austenit-Phase gelangt der Draht in seinen verkürzten Zustand, das heißt, der Draht weist die kürzeste Länge auf.

Im Gegensatz zu den Anwendungen in der Medizin und in der Haushaltstechnik muss im Automobilbereich ein Aktor mit Formgedächtniseigenschaften jedoch in einem erheblich größeren Temperaturbereich arbeiten. Dieser Temperaturbereich liegt etwa zwischen ca. -40° und ca. +85° Celsius. Die bekannten Legierungen, insbesondere die Nickel-Titanlegierungen verformen sich jedoch ab ca. 70° Celsius. Eine sichere Längenverstellung ist deshalb nicht über den gesamten Temperaturbereich des Drahtes zu gewährleisten.

### Vorteile der Erfindung

Das erfindungsgemäße Verfahren zur Steuerung eines Aktors, der unter Wärmeeinfluss längenveränderbar ist, weist den Vorteil auf, dass eine zuverlässige Aussage über den Zustand des Aktors getroffen und dementsprechend eine präzise Steuerung des Längenzustands des Aktors vorgenommen werden kann. Erfindungsgemäß wird hierbei die Tatsache ausgenutzt, dass der Innenwiderstand des Aktors proportional zur Temperatur des Aktors und damit zur Längenänderung bzw. zur Länge des Aktors ist, solange sich der Aktor in der Martensit-Phase befindet. Das erfindungsgemäße Verfahren umfasst damit als ersten Schritt die Bestimmung der Umgebungstemperatur in unmittelbarer Nähe des Aktors vor einer Bestromung. Da bei den Aktoren bzw. den im Aktor verwendeten Legierungen in etwa bekannt ist, bei welchen Temperaturen sie die Martensit-Phase verlassen, kann durch Bestimmung der Umgebungstemperatur festgestellt werden, in welcher Phase sich der Aktor vor der ersten Bestromung befindet. Liegt die gemessene Umgebungstemperatur deutlich unterhalb der Übergangstemperatur, bei der die Legierung von der Martensit-Phase in die Austenit-Phase übergeht, so kann zuverlässig festgestellt werden, dass sich der Aktor in der gewünschten Martensit-Phase befindet. Z.B. bei Legierungen aus Nickel-Titan liegt die Grenztemperatur für das Martensit-Gefüge bei ca. 65 Grad. Wird anfangs eine geringere Temperatur ermittelt, so ist der Aktor in der Martensit-Phase. Die Temperaturmessung kann auf einfache Weise durch einen Temperatursensor beispielsweise einen NTC-Widerstand erfolgen. In einem nächsten Schritt erfolgt das Bestromen des Aktors, so dass dieser durch den fließenden Strom erwärmt wird. Dabei wird der Innenwiderstand des Aktors ermittelt. Die Steuerung der Länge des Aktors wird dann in Abhängigkeit des ermittelten Widerstands vorgenommen. Da der Innenwiderstand des Aktors exakt zu bestimmen ist, kann eine präzise Steuerung der Längenänderung des Aktors vorgenommen werden. Diese Steuerung ist über den gesamten interessierenden Temperaturbereich vorzunehmen. Mit dem erfindungsgemäßen Verfahren können Fertigungsstreuungen des Drahtes, wie beispielsweise seine Dicke oder Länge, die Einfluss auf den Innenwiderstand haben, kompensiert werden. Auch kann ein variables Abkühlverhalten des Aktors in unterschiedlichen Umgebungsbedingungen kompensiert werden. So können verschiedene Temperaturen, Luftgeschwindigkeiten oder Feuchtigkeiten in der Umgebung des Aktors ausgeglichen werden.

Die Unteransprüche zeigen bevorzugte Weiterbildungen der Erfindung.

Bevorzugt wird nach dem erfindungsgemäßen Verfahren zur Längensteuerung der Strom, der durch den Aktor fließt, verändert. Ein Erhöhen des Stromflusses führt zu einer Erwärmung des Aktors und damit zu seiner Verkürzung. Dementsprechend wird durch einen verringerten Stromfluss die Temperatur des Aktors reduziert, so dass die Länge des Aktors vergrößert wird. Da der Aktor über einen Innenwiderstand verfügt, kann durch einfache Bestromung des Aktors Wärme erzeugt werden. Alternativ könnte die Erwärmung von außen zugeführt werden, beispielsweise durch Beleuchtung oder Bestrahlung mit elektromagnetischen Wellen. Darüber hinaus wäre es möglich, den Aktor von außen zu heizen, beispielsweise durch Heizschleifen oder durch ein Fluid mit einer entsprechenden Temperatur.

Vorzugsweise wird erfindungsgemäß nach dem Verfahren in einem Schritt festgestellt, ob sich der Aktor in der Martensit-Phase befindet. Solange der Werkstoff des Aktors in der Martensit-Phase verbleibt, ist der Innenwiderstand des Aktors proportional zu seiner Temperatur. Damit kann aus der Messung des Innenwiderstands direkt die Temperatur ermittelt werden. Dies kann beispielsweise über eine Korrespondenztabelle geschehen, die entweder für die verwendete Legierung des Aktors bekannt ist oder aus Messungen im Labor vorab ermittelt werden kann. Aus der ermittelten Temperatur kann dann auch die Länge des Aktors rückgeschlossen werden.

Vorteilhaft erweist sich, dass nach dem erfindungsgemäßen Verfahren, der Übergang von der Martensit-Phase zur Austenit-Phase des Aktors erkannt wird. Das Erkennen des Übergangs wird durch ein Feststellen einer sprunghaften Änderung des Innenwiderstands vorgenommen. In einem relativ schmalen Temperaturbereich oberhalb einer oberen Grenztemperatur der Martensit-Phase und unterhalb einer Grenztemperatur, ab der die Austenit-Phase beginnt, findet eine Verformung statt. Innerhalb dieses Bereiches verändert sich der Innenwiderstand des Aktors sprunghaft. Der Innenwiderstand fällt dann mit steigender Temperatur stark ab.

Bevorzugterweise wird nach dem Verfahren der Innenwiderstand des Aktors kontinuierlich ermittelt. Damit ist gewährleistet, dass auch bei einer relativ schnellen Erwärmung des Aktors durch einen großen Strom der Innenwiderstand und damit die Temperatur kontinuierlich gemessen werden kann. Nur so kann auch ein Widerstandssprung zuverlässig ermittelt werden.

Vorzugsweise wird der Austenit-Zustand des Aktors dadurch erkannt, dass sich der Widerstand über der Temperatur wenig ändert und nahezu konstant bleibt. Beim Erkennen der Austenit-Phase kann der Strom solange reduziert werden, solange der Aktor in der Austenit-Phase verbleibt. Damit kann der Strom auf ein Minimum reduziert werden, der notwendig ist um den kürzestmöglichen Zustand des Aktors zu erreichen. Eine weitere Verkürzung der Länge des Aktors ist auch bei deutlicher Erhöhung des Stroms nicht möglich.

Bevorzugt wird nach dem Verfahren der Innenwiderstand des Aktors durch Strom- und/oder Spannungsmessung ermittelt. Somit kann auf einfache Weise und sehr zuverlässig der Innenwiderstand gemessen werden. Die Messung des Stroms und der Spannung zur Widerstandsbestimmung liefert schnell und mit geringem Messaufwand einen exakten, überprüfbaren Wert.

Besonders bevorzugt wird nach dem Verfahren die Änderung des Stroms zur Längenreduktion durch Stromregelung durchgeführt. Da sich der Aktor in Abhängigkeit von durchfließendem Strom erwärmt, kann durch einfache Regelung des fließenden Stroms die gewünschte Temperatur im Aktor eingestellt werden. Alternativ zur Stromregelung kann eine Pulsweitenmodulation vorgenommen werden, wobei die aufmodulierten Pulse entsprechend der gewünschten Temperatur einzustellen sind.

Besonders bevorzugt wird die Ermittlung des Stroms mittels einer Spannungsmessung an Messwiderständen vorgenommen. Dabei wird der Innenwiderstand des Aktors kontinuierlich bestimmt.

Ferner betrifft die vorliegende Erfindung eine Vorrichtung zum Steuern eines Aktors, der unter Wärmeeinfluss längenveränderbar ist. Die Vorrichtung ist eingerichtet zur Ausführung des Verfahrens nach einem der vorhergehenden Absätze.

Vorzugsweise umfasst die Vorrichtung einen Aktor auf Basis von Formgedächtnislegierungen, einen Widerstand zur Strommessung durch den Aktor sowie einen Temperatursensor zur Messung der Umgebungstemperatur. Die Vorrichtung umfasst darüber hinaus ein Erfassungsgerät, um den Aktor zu steuern, also eine gewünschte Länge einzustellen, und zur Aufnahme und Verarbeitung der Messwerte.

Der Widerstand dient zur Strommessung durch den Aktor, so dass man über zusätzliche Messung der angelegten Spannung am Aktor während der Bestromung den Innenwiderstand des Aktors bestimmen kann. Der verwendete Temperatursensor wird vorzugsweise als NTC-Widerstand ausgeführt, so dass auch hier Strom- bzw. Spannungswerte verarbeitet werden können.

Besonders bevorzugt umfasst das Erfassungsgerät einen A/D-Wandler zur Digitalisierung der erfassten analogen Messwerte, also insbesondere eines temperaturproportionalen Messwerts des Temperatursensors sowie der Strom- und Spannungswerte. Das Erfassungsgerät umfasst ferner eine Energieversorgungseinheit zur Versorgung des Aktors mit elektrischer Energie. Vorteilhaft erweist sich ein Spannungswandler, der beispielsweise die im Kraftfahrzeug übliche 12 Volt-Spannung umwandelt und gleichzeitig das Erfassungsgerät vom Boardnetz des Kfz entkoppelt. Eine Endstufe verstärkt die vom Spannungswandler zur Verfügung gestellte Spannung, so dass letztlich auch hohe Ströme durch den Zugaktor geleitet werden können. Ein Mikroprozessor im Erfassungsgerät dient zur Auswertung der Messwerte und zur Steuerung des Stroms durch den Aktor, um diesen in Abhängigkeit der ermittelten Messwerte, insbesondere in Abhängigkeit des Innenwiderstands, zu steuern.

### Zeichnung

Nachfolgend wird unter Bezugnahme auf die Zeichnung ein bevorzugtes Ausführungsbeispiel der Erfindung im Detail beschrieben. Es zeigen:
Figur 1 den Verlauf des Innenwiderstands eines Aktors über dessen Temperatur; und
Figur 2 ein Prinzipschaltbild der erfindungsgemäßen Vorrichtung zur Steuerung eines Aktors.

### Beschreibung des Ausführungsbeispiels:

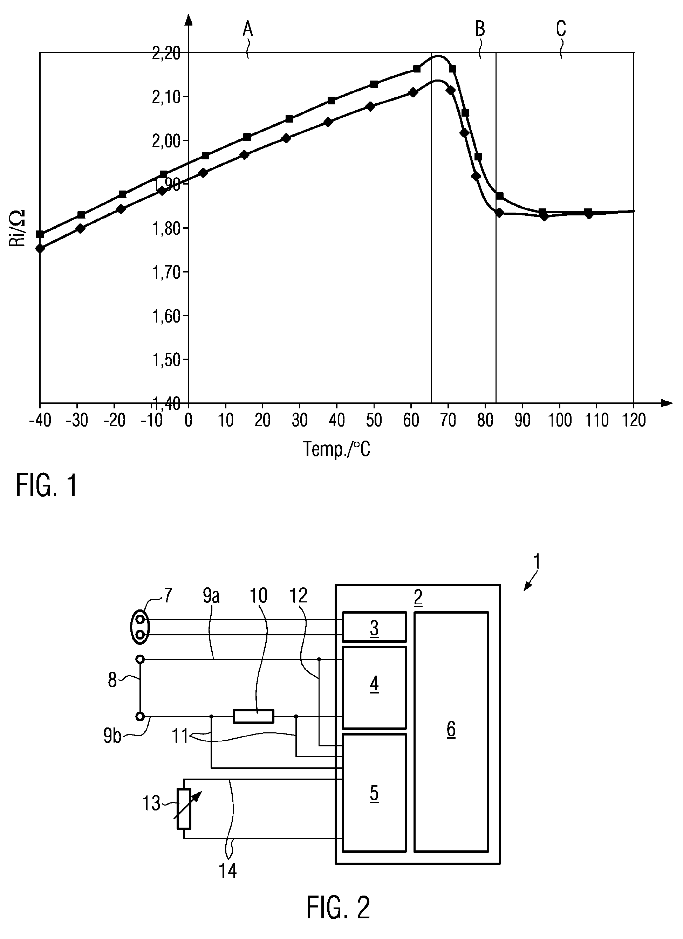

Figur 1 zeigt den Verlauf des Innenwiderstands über der Temperatur abgetragen für zwei Zugaktoren in Drahtform, die auf Basis von Formgedächtnislegierungen hergestellt wurden. Die verwendeten Legierungen sind Nickel-Titan. Bis zu einer Temperatur von 65 Grad Celsius befinden sich die Zugaktoren im Martensitgefüge A. In diesem Bereich steigt der Innenwiderstand der Zugaktoren proportional zur Temperatur an.

An die Martensit-Phase A schließt sich von ca. 65 Grad ein Temperaturbereich B bis etwa 82 Grad Celsius an, in dem sich der Zugaktor verformt. In diesem Bereich B nimmt der Innenwiderstand sprunghaft ab.

An die Verformungsphase B schließt sich die Austenit-Phase C an. Diese beginnt bei einer unteren Grenztemperatur von ca. 82° Celsius. Innerhalb der Austenit-Phase C bleibt der Innenwiderstand der Zugaktoren nahezu konstant. Der Innenwiderstand in dem Bereich über 82° Celsius entspricht etwa dem Innenwiderstand, den die Zugaktoren auch im Bereich kleiner minus 10° Celsius aufweisen. Um sicherzustellen, in welchem Gefügebereich sich der Zugaktor befindet, wird vor einer ersten Bestromung des Zugaktors die Umgebungstemperatur nahe am Zugaktor ermittelt.

Solange sich der Innenwiderstand der vorliegenden Zugaktoren in der Martensit-Phase A befindet, weist der Innenwiderstand ein typisches PTC-Verhalten auf. In dieser Phase ist der Innenwiderstand proportional zur Temperatur. Durch die Messung des Innenwiderstands kann somit auf die Temperatur rückgeschlossen werden, so dass durch Regelung des Stroms durch den Aktor die Länge des Aktors verändert werden kann. Solange sich der Aktor in der Martensit-Phase A befindet, kann seine Länge noch verkürzt werden. Nachdem der Aktor in die Austenit-Phase C gelangt ist, hat er seinen möglichst kurzen Zustand erreicht. Eine weitere Verkürzung des Aktors ist nicht möglich.

Durch kontinuierliches Messen des Widerstandes kann also verhindert werden, dass der Aktor in den Bereich der Verformung und schließlich in dem Bereich der Austenit-Phase gelangt, in der keine gewünschte Längenänderung mehr möglich ist.

Die erfindungsgemäße Vorrichtung 1 zur Längensteuerung eines Aktors in Figur 2 zeigt ein Erfassungsgerät 2 mit einem Spannungswandler 3, einer Endstufe 4, einem A/D-Wandler 5 und einem Mikroprozessor 6. Über den Spannungswandler 3 ist das Erfassungsgerät 2 mit der Spannungsversorgung 7 des Kraftfahrzeugs verbunden, die durch zwei Klemmen dargestellt ist.

Ein Aktor 8, der als Zugaktor in Drahtform ausgeführt ist, wird über zwei Leitungen 9a, 9b mit der Endstufe 4 verbunden. Über diese Leitungen 9a, 9b wird ein Strom durch den Aktor 8 geleitet. In der Leitung 9b ist ein Widerstand 10 vorgesehen, der über zwei Messleitungen 11 mit dem A/D-Wandler 5 verbunden ist. Eine weitere Messleitung 12 ist mit der Leitung 9a verbunden; sie endet ebenfalls im A/D-Wandler 5. Somit lässt sich durch Strom- und Spannungsmessung der Innenwiderstand des Aktors 8 bestimmen. Gleichzeitig kann durch die Spannungsmessung am Widerstand 10 der Strom durch den Aktor 8 bestimmt werden. Alternativ kann auch eine Pulsweitenmodulation zur Steuerung des Aktors 8 vorgesehen sein.

Ein Temperatursensor 13 ist als NTC-Widerstand ausgeführt. Er wird über die beiden Temperaturleitungen 14 ebenfalls mit dem A/D-Wandler 5 verbunden. Der Temperatursensor 13 dient zur Messung der Umgebungstemperatur des Aktors, um vor der ersten Stromung festzustellen, ob sich der Aktor in der Martensit-Phase befindet.

Die oben beschriebene Vorrichtung 1 mit dem Aktor 8 kann beispielsweise zur Ansteuerung eines Deflektors, also eines Windabweisers, bei Schiebedächern eingesetzt werden. Auch bieten sich weitere Anwendungen in Fahrzeugen an, bei denen ein Draht durch Erwärmung in seiner Länge verändert werden soll.

## Patentansprüche

1. Verfahren zur Steuerung eines Aktors (8), der unter Wärmeeinfluss längenveränderbar ist, **gekennzeichnet durch** folgende Schritte:
- Messen der Umgebungstemperatur in unmittelbarer Nähe des Aktors (8) vor der Bestromung;
- Leiten eines Stroms **durch** den Aktor (8) zu dessen Erwärmung;
- Ermitteln eines Innenwiderstands im Aktor (8); und
- Steuerung der Länge des Aktors (8) in Abhängigkeit vom ermittelten Innenwiderstand.

2. Verfahren nach Anspruch 1, **dadurch gekennzeichnet, dass** zur Längensteuerung der Strom durch den Aktor (8) verändert wird.

3. Verfahren nach Anspruch 1 oder 2, **gekennzeichnet durch** folgenden Schritt:
Feststellen in Abhängigkeit vom Innenwiderstand, ob sich der Aktor (8) in Martensit-Phase (A) befindet.

4. Verfahren nach einem der vorhergehenden Ansprüche, **gekennzeichnet durch** kontinuierliches Ermitteln des Innenwiderstands des Aktors (8).

5. Verfahren nach einem der vorhergehenden Ansprüche, **dadurch gekennzeichnet, dass** bei Erkennen der Austenit-Phase (C) Strom so weit reduziert wird, dass der Aktor (8) noch in der Austenit-Phase (C) verbleibt.

6. Verfahren nach einem der vorhergehenden Ansprüche, **dadurch gekennzeichnet, dass** der Übergang von der Martensit-Phase (A) zur Austenit-Phase (C) des Aktors (8) erkannt wird durch Feststellen einer sprunghaften Änderung des Innenwiderstands.

7. Verfahren nach einem der vorhergehenden Ansprüche, **gekennzeichnet durch** Ermitteln des Innenwiderstand des Aktors (8) **durch** Strom- und/oder Spannungsmessung.

8. Verfahren nach einem der vorhergehenden Ansprüche, **dadurch gekennzeichnet, dass** die Veränderung des Stroms zur Längenreduktion durch Stromregelung und/oder durch Pulsweitenmodulation erfolgt.

9. Verfahren nach Anspruch 8, **gekennzeichnet durch** Reduzieren des Stroms **durch** Regelung mittels Widerstandsmessung.

10. Vorrichtung zum Steuern eines Aktors (8), der unter Wärmeeinfluss längenveränderbar ist, eingerichtet zur Ausführung des Verfahrens nach einem der vorhergehenden Ansprüche.

11. Vorrichtung nach Anspruch 10, umfassend einen Aktor (8), dessen Länge unter Wärmeeinfluss veränderbar ist, einen Widerstand zur Strommessung durch den Aktor (8), einen Temperatursensor (13) zur Erfassung der Umgebungstemperatur des Aktors (8), und ein Erfassungsgerät (2) zur Steuerung des Aktors (8) und Verarbeitung der Messwerte.

12. Vorrichtung nach Anspruch 11, **dadurch gekennzeichnet, dass** das Erfassungsgerät (2) umfasst:
- einen A/D-Wandler (5) zur Digitalisierung der analogen Messwerte, insbesondere der Temperatur und der Strom- und Spannungswerte,
- eine Energieversorgungseinheit zur Speisung des Aktors (8) mit elektrischer Energie und
- einen Mikroprozessor (6) zur Auswertung der Messwerte und zur Steuerung des Aktors (8) in Abhängigkeit der Messwerte.
